# EUROPÄISCHE PATENTSCHRIFT

(11) **EP 4 086 603 B1**
(45) Veröffentlichungstag und Bekanntmachung des Hinweises auf die Patenterteilung: **27.03.2024**
(21) Anmeldenummer: 22171759.8
(22) Anmeldetag: 05.05.2022
(51) Int. Cl.: G01M 3/38, G01M 3/02, E02D 31/02, E04F 15/00

(54) **LECKAGEKONTROLLSYSTEM**
LEAKAGE CONTROL SYSTEM
SYSTÈME DE DÉTECTION DES FUITES

(30) Priorität: 07.05.2021 DE 102021112036
(43) Veröffentlichungstag der Anmeldung: 09.11.2022
(73) Patentinhaber: JOPE Beteiligungs GmbH, 87653 Eggenthal (DE)
(72) Erfinder: Baur, Peter, 87724 Ottobeuren (DE)
(74) Vertreter: Patentanwälte Olbricht, Buchhold, Keulertz Partnerschaft mbB

(56) Entgegenhaltungen:
- EP-A1- 3 608 648
- AT-B- 326 880
- Anonymous: "DIN 18533 Abdichtung von erdberührten Bauteilen - Teil 1: Anforderungen, Planungs- und Ausführungsgrundsätze |", , 1. Juni 2018 (2018-06-01), Seiten 1-6, XP055925106, Gefunden im Internet: URL:https://ibhafer.de/2018/06/din-18533-a bdichtung-von-erdberuehrten-bauteilen-teil -1-anforderungen-planungs-und-ausfuehrungs grundsaetze/ [gefunden am 2022-05-25]

## Beschreibung

Die Erfindung betrifft ein Leckagekontrollsystem für die Dichtigkeitsüberwachung eines Bauwerkes, wie zum Beispiel der Bodenplatte eines Behälters.

Aus Gründen des Umwelt- bzw. Grundwasserschutzes ist es seit langem bekannt, unterhalb von Bauwerken, wie Behälter oder ähnlichem, die natürlich auch eine Bauwerksabdichtung aufweisen, aus Sicherheitsgründen eine zweite Dichtungsebene durch eine Leckagefolie vorzusehen. Diese zweite Dichtungsebene, nachfolgend auch als Gebäudeabdichtung bezeichnet, fängt die Flüssigkeit auf, die aus Undichtigkeiten der Bauwerksabdichtung aus dem Bauwerk austritt. Hierzu ist es bekannt, die Gebäudeabdichtung wannenartig auszubilden, sie besteht aus einen im Wesentlichen horizontal orientierten Bodenbereich und einen sich hieran dicht anschließenden, gegenüber dem Bodenbereich hochstehenden, oder auch hochgezogenen bzw. hochgeschlagenen Wandbereich, der einen Rand der Wanne bildet. Die Höhe des um den Bodenbereich umlaufenden Wandbereiches bestimmt letztendlich das Volumen an Flüssigkeit, das von der Gebäudeabdichtung aufgenommen werden kann.

Üblicherweise befindet sich die Bauwerksabdichtung im Bauwerk, dies ist zum Beispiel die Beschichtung eines Flüssigkeitsbehälters und die Gebäudeabdichtung befindet sich unterhalb des Bauwerks.

Es ist im Stand der Technik auch bekannt hierfür Leckagekontrollsysteme vorzusehen. Mit diesen Leckagekontrollsystemen wird erkannt, wenn sich tatsächlich Flüssigkeit an dieser zweiten, üblicherweise letzten Dichtungsebene, der Gebäudeabdichtung sammelt. Wird hier Flüssigkeit entdeckt, sind dringend Maßnahmen zur Sanierung der Bauwerksabdichtung einzuleiten.

AT 326 880 B, EP 3 608 648 A1 und Anonymous: "DIN 18533 Abdichtung von erdberührten Bauteilen - Teil 1: Anforderungen, Planungs- und Ausführungsgrundsätze", 1. Juni 2018, Seiten 1-6, XP055925106, beschreiben jeweils gattungsgemäße Möglichkeiten zum Bereitstellen von Leckagekontrollsystemen in Bauwerken.

Bei den bekannten Systemen wird unterhalb der Bodenplatte eine Leckagefolie verlegt, die, nachdem die Wand des Bauwerkes auf der Bodenplatte errichtet ist, an dieser befestigt wird. An einem möglichst tiefen Punkt der Leckagefolie zweigt ein Anschluss ab zu einem distanziert zum Bauwerk angeordneten Kontrollrohr. Dieser Anschluss ist mit hoher Dichtigkeit an die Leckagefolie auszuführen. Über das Kontrollrohr sind Inspektionen möglich.

Nachteilig bei diesen bekannten Lösungen ist, dass die Herstellung der bekannten Leckagekontrollsysteme verhältnismäßig aufwendig ist, da in einem ersten Schritt zunächst die Leckagefolie ausgebracht und in einem zweiten Schritt, nachdem die Bodenplatte und auch die Wände des Bauwerkes erstellt sind, die Leckagefolie an das Gebäude angeschlossen werden muss.

Es ist Aufgabe der vorliegenden Erfindung ein einfach zu kontrollierendes und schnell zu montierendes Leckagekontrollsystem bereitzustellen.

Die Aufgabe wird gelöst durch den Gegenstand der beiliegenden Ansprüche.

Der Pfiff der Erfindung liegt darin, dass vorgeschlagen wird, dass das hochzuziehende Ende der Leckagefolie (zur Bildung des Wandbereiches der Gebäudeabdichtung) nicht mehr an einer später zu errichtenden Gebäudewand angeschlossen wird, sondern dieses Ende an einen Abstandshalter angeordnet wird. Der Abstandshalter wird, sobald die Leckagefolie verlegt ist, sogleich auf dieser positioniert und idealerweise die Leckagefolie gleich nach Positionierung der Abstandshalter an diesem hochgeschlagen und festgelegt.

Die Erfindung beschränkt sich hierbei nicht nur auf ein Hochschlagen des Endbereiches der Leckagefolie, auch ein nicht im Randbereich der Leckagefolie liegende Bereich der Leckagefolie kann bei entsprechender Positionierung eines Abstandhalters an diesen im Sinne der Erfindung hochgeschlagen werden.

Üblicherweise wird der Boden- und Wandbereich der Gebäudeabdichtung einstückig ausgeführt und wird vorzugsweise von einer Leckagefolie gebildet, deren Wandbereich gegenüber dem heutzutage orientierten Bodenbereich nach oben gefaltet und somit hochgeschlagen ist.

Es ist klar, dass das Leckagekontrollsystem nur funktioniert, wenn der gesamte Randbereich der Leckagefolie ausreichend vertikal von der untersten Dichtebene der Leckagefolie (oftmals unter der Bodenplatte), dem Bodenbereich der Gebäudeabdichtung, beabstandet ist. Daher umfasst das erfindungsgemäße Leckagekontrollsystem eine Mehrzahl von Abstandhaltern. Mindestens einer oder ein Teil der Abstandhalter ist auch mit einem Kontrollrohr ausgestattet. Die Abstandhalter werden auf (mit einem Kontrollrohr) und die Leckagefolie am Abstandshalter hochgeschlagen oder hochgezogen (was hier gleichwertig ist) und vorzugsweise im oberen Segment des Abstandshalters oder auf der Oberseite der Abstandhalter an diesen fixiert.

Es ist klar, dass gemäß der Erfindung eine Vielzahl von Abstandshaltern, zum Beispiel eine Reihe von Abstandshaltern vorgesehen ist.

Natürlich ist auch vorgesehen, dass die Leckagefolie nicht nur an einer Stelle oder einen Punkt an dem Abstandshalter festgelegt wird, sondern eine Mehrzahl von Befestigungspunkten je Abstandhalter für die Leckagefolie vorgesehen sind. Der bzw. die Abstandhalter fungiert/fungieren dann als verlorenes Schalungselement/e und verbleibt/en im Bauwerk bzw. der Bodenplatte.

Durch diesen erfindungsgemäßen Vorschlag werden erhebliche Kosten aber auch Bauzeit eingespart.

Bei den Vorschlägen nach dem Stand der Technik musste der Handwerker mindestens zweimal auf die Baustelle kommen, nämlich einmal vor dem Betonieren der Bodenplatte und einmal nach Abschluss des Betonierens der Bodenplatte. Beim ersten Mal wurde die Leckagefolie ausgelegt, beim zweiten Mal wurde der Rand der Leckagefolie an den dann bereits erstellten Wänden des Bauwerkes hochgezogen und befestigt, sowie der dichte Anschluss zu dem Kontrollrohr ausgeführt.

Gemäß dem erfindungsgemäßen Vorschlag reicht es jetzt aus, dass der Handwerker nur einmal, vor dem Betonieren, auf der Baustelle anwesend ist, wodurch entsprechende Mehrarbeit, aber auch Abstimmungsaufwand der Handwerker bzw. Gewerke untereinander eingespart wird. Der erfindungsgemäße Vorschlag reduziert daher nicht nur die tatsächlichen Arbeitskosten, sondern beschleunigt auch den Bauablauf durch geringeren Abstimmungsaufwand.

Der erfindungsgemäße Vorschlag beschleunigt, bei geringeren Kosten, nicht nur die Baustelle, das Leckagekontrollsystem ist durch den erfindungsgemäßen Vorschlag auch zuverlässiger sowie einfacher zu realisieren. Im Stand der Technik war es bekannt, das Kontrollrohr mit einem dichten Anschluss an eine Ausnehmung der Leckagefolie anzuschließen. Dieser dichte Anschluss ist entsprechend aufwendig auszuführen, da natürlich an dieser letzten Dichteebene keine Undichtigkeiten auftreten dürfen, da dann die aufzufangende Flüssigkeit unkontrolliert in den Untergrund ablaufen könnte. Die Ausnehmungen in der Leckagefolie befindet sich bei der Lösung nach der Erfindung in dem Bereich der Leckagefolie, der auf dem Abstandhalter liegt, also dem Wandbereich (der durch die hochgeschlagene Leckagefolie entstanden ist) der zu bildenden Gebäudeabdichtung und der daher nicht mehr zwingend abzudichten ist, um das erfindungsgemäße Leckagesystem einzusetzen. Gleichwohl umfasst die Erfindung auch die Möglichkeit, einen dichten Anschluss zwischen dem Kontrollrohr und der Leckagefolie herzustellen. Die Anordnung ist dabei so geschickt gewählt, dass hier eine separate Abdichtung nicht notwendig ist, wodurch es dann auch möglich ist, das erfindungsgemäße Leckagekontrollsystem als Bausatz zur Verfügung zu stellen. Dieser Bausatz wird dann zum Beispiel bei der Gründung des Bauwerkes durch die Handwerker, die dann auch die Bodenplatte erstellen, verarbeitet. Auf spezielle Kenntnisse für ein sicheres Verschweißen der aus Kunststoff gefertigten Leckagefolie kommt es gemäß dem Vorschlag nach der Erfindung nicht mehr an.

Das erfindungsgemäße vorgeschlagene Leckagekontrollsystem ist geeignet sowohl bei Undichtigkeiten des Bauwerkes bezüglich Flüssigkeiten wie auch bei Undichtigkeiten von Gasen eingesetzt zu werden.

Des Weiteren ist in dem Vorschlag vorgesehen, dass eine Mehrzahl von Abstandshaltern, insbesondere eine Abstandshalterreihe vorgesehen ist, die dafür vorgesehen sind, das Bauwerk zu umgeben. Üblicherweise ist einer der Abstandhalter bzw. die Mehrzahl von Abstandshaltern am Rand des Bauwerkes vorgesehen und umgeben dieses. Da mithilfe der Leckagefolie ein wannenartiger Auffangraum zur Absicherung der Bauwerksabdichtung gebildet wird, beschreibt der obere Rand der Abstandhalter auch gleichzeitig den oberen Rand dieses Auffangraumes. Daher ist es günstig, die Abstandshalter am Rand des Bauwerkes bzw. der Bodenplatte anzuordnen, ohne aber hierbei den erfindungsgemäßen Vorschlag auf nur diesen einen Anwendungsfall zu reduzieren. Gemäß der Erfindung ist es auch möglich, dass sich einer oder mehrere der Abstandhalter nicht nur am, sondern auch im Bauwerk befindet, was zum Beispiel bei im Keller zugänglichen Inspektionsräumen Anwendung findet.

Vorzugsweise ist vorgesehen, dass die Abstandhalter im äußeren Bereich der Bodenplatte, vorzugsweise auf der gesamten Länge oder dem Umfang des Bauwerkes angeordnet sind. Dabei ist es möglich, dass die Abstandhalter nicht Stoß an Stoß aneinander anstehen, sondern zueinander auch einen gewissen Abstand aufweisen können. Auch ist nicht vorgesehen, dass jeder Abstandhalter zwingend ein Kontrollrohr trägt, üblicherweise reicht eine geringe Anzahl von Kontrollrohren aus, um hierüber die Dichtigkeit der Bauwerksabdichtung zu kontrollieren.

Über das Kontrollrohr ist eine optische, d.h. visuelle oder auch eine mit einem Sensor oder einer Sonde ausgestattete, automatische Überprüfung bzw. Überwachung möglich. Das untere Ende des Kontrollrohres taucht in den durch die Leckagefolie gebildeten und begrenzten Auffangraum ein.

Bei einer bevorzugten Ausgestaltung des Vorschlags ist vorgesehen, dass der Abstandshalter einstückig mit dem Kontrollrohr ausgebildet ist oder der Abstandshalter und das Kontrollrohr als jeweils getrennte, aber zusammenwirkende Bauteile ausgebildet sind. Für die Ausführung des Abstandhalters zusammen mit dem Kontrollrohr schlägt die Erfindung eine Mehrzahl von Varianten vor.

Es wurde bereits darauf hingewiesen, dass die Funktion des Abstandhalters nicht nur auf die Bildung eines Aufstellfußes für das Kontrollrohr beschränkt ist, sondern der Abstandhalter insbesondere einen hochgelegten oberen Fixierungspunkt für die Leckagefolie bildet.

Je nach Art der Montage ist nach der Erfindung vorgesehen, dass der Abstandhalter und das Kontrollrohr getrennt voneinander, jeweils als getrennte Bauteile an die Baustelle geliefert werden und das Kontrollrohr erst nachdem der Abstandhalter auf dem Untergrund positioniert ist und gegebenenfalls (ebenfalls nicht zwingend) die Leckagefolie über die am Abstandhalter vorgesehene Aufnahmeöffnung für das Kontrollrohr positioniert ist, das Kontrollrohr mit dem Abstandhalter verbunden wird. Idealerweise besitzt dabei der Abstandhalter eine über die Höhe des Abstandhalters vorgesehene Aufnahmeöffnung, die so dimensioniert ist, dass das Kontrollrohr eingeführt und gegebenenfalls leicht klemmend in diesem fixiert ist.

In einer anderen Variante ist vorgesehen, dass der Abstandhalter einstückig mit dem Kontrollrohr ausgebildet ist. In diesem Falle wird der Abstandhalter bereits mit dem Kontrollrohr verbunden auf die Baustelle geliefert. Die Einstückigkeit wird zum Beispiel dadurch hergestellt, dass das Kontrollrohr und der Abstandhalter aus dem gleichen Material, in einem Herstellungsschritt gebildet, zum Beispiel gespritzt wird. In diesem Fall besteht diese Einheit zum Beispiel aus PVC oder PE oder einem anderen geeigneten Kunststoff oder Material. Einstückigkeit wird aber auch dadurch hergestellt, dass der Abstandhalter und das Kontrollrohr aus unterschiedlichen Materialien bestehen, die aber dann fest miteinander verbunden, zum Beispiel verklebt werden und in dieser Einheit angeliefert werden.

Die Abstandhalter, die dafür vorgesehen sind, das Kontrollrohr zu halten und besitzt vorzugsweise auch eine größere Standfläche, damit das Kontrollrohr stabil, insbesondere während der Betonierens der Bodenplatte, positioniert ist.

Als Material für den Abstandhalter wird zum Beispiel Polystyrol eingesetzt. Dieses Material zeichnet sich durch geringes Gewicht bei ausreichender Steifigkeit und hohe Freiheit bei der Formgebung aus und kann insbesondere auch an der Baustelle mit einfachen Werkzeugen bearbeitet werden.

Der Abstandhalter hat, da er günstiger Weise eine gewisse Höhe aufweist, vorzugsweise die Form eines Quaders.

Das Kontrollrohr besteht vorzugsweise aus einem ausreichend widerstandsfähigen Kunststoff, wie zum Beispiel PVC oder ähnlichem.

Des Weiteren ist vorgesehen, dass die Leckagefolie von unten über den Abstandshalter gelegt und oben an diesem oder in dessen oberen Segment an der Seite fixiert ist. Erfindungsgemäß ist vorgesehen, dass sich die Leckagefolie unter dem Kontrollrohr befindet. Daher befindet sich die Leckagefolie, zumindest im Bereich des Kontrollohres, auch unterhalb des Abstandhalters, der das Kontrollrohr trägt. Da die Leckagefolie an dem Abstandhalter hochgeschlagen ist, hüllt die Leckagefolie den Abstandhalter zumindest teilweise ein. Günstigerweise wird die Leckagefolie auf der (horizontal verlaufenden) Oberseite des Abstandhalters an diesen fixiert, da diese Position die höchste Lage ist. Natürlich ist es möglich, die Leckagefolie auch an dem vertikal verlaufenden Abschnitt oder Segment des Abstandhalters festzulegen. Auch diese Lösung gehört zur Erfindung.

Die Leckagefolie besteht vorzugsweise aus Kunststoff, insbesondere aus PVC, PE, PELD einem anderen geeigneten Kunststoffmaterial oder einen ausreichend verrottungsfesten Kunststoff. Sie besitzt eine Dicke von mindestens 0,8 mm, vorzugsweise zwischen 1,5 und 2,0 mm und ist gegebenenfalls auch faserverstärkt.

Da nicht alle Abstandhalter zwingend mit einem Kontrollrohr ausgestattet sind, ist bei Abstandhalter, die nicht mit dem Kontrollrohr verbunden werden, eine andere Anschlusstechnik der Leckagefolie einsetzbar. In diesem Fall liegt der Abstandhalter nicht auf der Leckagefolie, sondern neben (zum Beispiel neben einer ungeschlagenen oder umgefalteten Leckagefolie) oder unterhalb der Leckagefolie. In diesem Fall wird die Leckagefolie an der der Leckagefolie zugewandten Seite des Abstandhalters an dieser hochgezogen und nicht, wie bei der Lösung mit Kontrollrohr fast dreiseitig von der Leckagefolie eingehüllt. Der Abstandhalter liegt dann direkt auf dem Untergrund bzw. gegebenenfalls auf einem Schutzvlies. Die Erfindung umfasst auch diesen Vorschlag.

In einer vorteilhaften Ausgestaltung ist vorgesehen, dass sich der Abstandshalter über mindestens einen Beabstandungsfuß auf der Leckagefolie abstützt. Durch den mindestens einen Beabstandungsfuß oder den mehreren Beabstandungsfüßen stützt sich der Abstandhalter nicht über seine gesamte Grundfläche auf der Leckagefolie ab, sondern ist etwas über die Leckagefolie hochgestellt. Dieser Vorschlag bewirkt, dass es möglich sei, dass Flüssigkeit seitlich unter den Abstandhalter in dem Bereich des Kontrollrohres einfließen und dort dann entdeckt werden kann. Ohne diesen Vorschlag besteht das Risiko, dass das Gewicht des Bauwerkes, das ebenfalls teilweise über den Abstandhalter auf den Untergrund abgeleitet wird, den Abstandhalter so fest auf die Leckagefolie presst, dass der Spalt zwischen der Leckagefolie und dem Abstandhalter abgedichtet ist. Neben diesem Vorschlag ist, wie noch weiter unten weiter ausgeführt werden wird, alternativ auch der Einsatz eines Drainagematerials vorgesehen, das möglichst flächig auf der Leckagefolie ausgebracht wird und auch so einen entsprechenden Flüssigkeitsleitungskanal unter den Abstandhalter bewirkt.

In einer vorteilhaften Ausgestaltung ist vorgesehen, dass die Leckagefolie auf einer ersten Seite des Kontrollrohres bzw. des Abstandshalters, zum Beispiel der dem Bauwerk abgewandten Seite des Kontrollrohres bzw. des Abstandshalters hochgeschlagen ist. Üblicherweise wird das Kontrollrohr des erfindungsgemäßen Leckagekontrollsystems seitlich neben dem Bauwerk (in diesem Fall ist das Bauwerk durch seine Außenwände definiert) angeordnet, wenngleich das Kontrollrohr hernach oftmals in den seitlichen Bodenplattenüberstand einbetoniert wird, der letztendlich auch zum Bauwerk gehört.

Geschickter Weise ist vorgesehen, dass die Leckagefolie eine Ausnehmung zur Aufnahme des Kontrollrohres aufweist. Für den Fall, dass die Leckagefolie von außen über den Abstandhalter hochgezogen und auf dem inneren, dem Bauwerk zugewandten Rand oder Ende des Abstandhalters gelegt und dort fixiert wird, würde die Leckagefolie die Aufnahmeöffnung im Abstandhalter für das Kontrollrohr verdecken. Daher ist es günstig, hier eine entsprechende Ausnehmung vorzusehen, die idealerweise mit der Ausnehmung in dem Abstandhalter zusammenwirkt. Da sich diese Ausnehmung im oberen Bereich der Leckagefolie befindet, beeinträchtigt diese Ausnehmung nicht die Dichtigkeit der durch die Leckagefolie gebildeten zweiten Dichthaut.

Alternativ ist es auch möglich, dass das Kontrollrohr an dem Abstandhalter auf der dem Bauwerk zugewandten Seite des Abstandhalters angeordnet ist und auf den etwas weiter entfernten Bereich des Abstandhalters die Leckagefolie auf dem Abstandhalter festgelegt wird, wodurch die Einbringung der Ausnehmung in die Leckagefolie eingespart werden kann.

In einer weiteren bevorzugten Ausführungsform ist vorgesehen, dass die Leckagefolie auf einer zweiten Seite des Kontrollrohres bzw. des Abstandshalters, der ersten Seite gegenüberliegend, zum Beispiel der dem Bauwerk zugewandten Seite des Kontrollrohres bzw. Abstandshalters an dieser festgelegt bzw. festlegbar ist. Diese räumliche Anordnung ist insbesondere in dem Bereich des Leckagekontrollsystems vorgesehen, bei welchem die Abstandhalter nicht mit einem Kontrollrohr ausgestattet sind.

Erfindungsgemäß ist vorgesehen, dass auf der Leckagefolie ein Drainagematerial angeordnet ist. Idealerweise ist das Drainagematerial vollflächig auf der horizontal verlegten Leckagefolie ausgebracht. Damit befindet sich das Drainagematerial sowohl unterhalb der Bodenplatte, wie auch unterhalb des Kontrollrohres. Zu beachten ist, dass auf der Leckagefolie die Bodenplatte errichtet wird und das Gewicht der Bodenplatte sich über die Leckagefolie auf den Untergrund abstützt. Die Verwendung des Drainagematerials bewirkt die Ausbildung eines Spaltes zwischen der Unterseite der Bodenplatte und der Leckagefolie, in dem sich möglicherweise aus dem Bauwerk austretende Flüssigkeit sammeln und, z.B. aufgrund der Kapillarwirkung des Drainagematerials, seitlich abgeleitet werden kann.

Den gleichen Effekt erreicht das Drainagematerial auch unterhalb des Abstandhalters, wie oben bereits angedeutet. Erfindungsgemäß ist daher im Bereich des Kontrollrohres das Drainagematerial zwischen der Leckagefolie und dem Kontrollrohr angeordnet.

Vorzugsweise ist als Drainagematerial ein Drainagevlies, eine Drainagematte oder eine Kiesfilterschicht vorgesehen.

Des Weiteren ist in dem Vorschlag vorteilhafter Weise vorgesehen, dass unter der Leckagefolie ein Folienschutzvlies angeordnet ist. Das Folienschutzvlies schützt die Leckagefolie vor mechanischer Beschädigung. Vorzugsweise besitzt das Folienschutzvlies die gleiche flächige Dimensionierung wie die Leckagefolie und wird mit dieser im Bereich der bzw. des Abstandhalters in gleicher Weise mit der Leckagefolie hochgezogen, verlegt und befestigt. Idealerweise wird das Folienschutzvlies mit der Leckagefolie gemeinsam verlegt und befestigt. Eine solche Vorgehensweise spart Zeit und Kosten und stellt sicher, dass die Leckagefolie effektiv geschützt ist.

Des Weiteren ist günstiger Weise vorgesehen, dass auf der Leckagefolie eine Baufolie angeordnet ist und die Baufolie dafür vorgesehen ist, unter dem Bauwerk angeordnet zu sein. Die Baufolie hat die Aufgabe, beim Gießen der Bodenplatte das Drainagematerial zu schützen. Die Baufolie verhindert, dass die Betonschlämme in das, unter Umständen auch saugfähige Drainagematerial eindringt und dann dort aushärtet, was den Drainageeffekt, also die Fähigkeit aus dem Bauwerk ausgetretene Flüssigkeit abzuleiten, unterbinden würde. Vorzugsweise ist vorgesehen, dass die Baufolie nicht flächig dicht ausgeführt ist, also selber eine Dichtebene ausbildet. Vielmehr erlaubt die Baufolie, dass aus dem Bauwerk austretende Flüssigkeit durch diese in das Drainagematerial abfließen kann und auf der wirksamen Ebene der Leckagefolie gehalten wird und dann im Kontrollrohr des erfindungsgemäßen Leckagekontrollsystems entdeckt wird.

Des Weiteren ist in dem Vorschlag vorteilhafter Weise vorgesehen, dass die Baufolie an dem Kontrollrohr bzw. dem Abstandshalter hochgezogen ist und an diesem anschließt. Dies ist eine Möglichkeit, die Baufolie ordentlich und sachgerecht zu verlegen.

Sie wird dabei zum Beispiel parallel zu der Leckagefolie verlegt und gemeinsam mit dieser, vorzugsweise im gleichen Arbeitsschritt, an dem Abstandhalter bzw. dem Kontrollrohr befestigt. In diesem Fall ist die Baufolie auf einer ersten Seite des Kontrollrohres, zum Beispiel der dem Bauwerk abgewandten Seite des Kontrollrohres bzw. dem Abstandshalter, hochgeschlagen.

Alternativ hierzu ist es auch möglich, dass die Baufolie auf einer zweiten Seite des Kontrollrohres, der ersten Seite gegenüberliegend, zum Beispiel der, dem Bauwerk zugewandten Seite am Abstandshalter hochgezogen ist. Da die Baufolie keine Abdichtaufgabe wie die Leckagefolie hat, muss die Baufolie daher nicht zwingend unter dem Kontrollrohr angeordnet sein, sondern kann vor diesem am Abstandhalter hochgezogen und befestigt werden.

Bei einer bevorzugten Ausgestaltung des Vorschlags ist vorgesehen, dass die Baufolie eine Ausnehmung zur Aufnahme des Kontrollrohres aufweist. Ähnlich wie die Leckagefolie ist auch vorgesehen, dass die Baufolie eine Ausnehmung zur Aufnahme des Kontrollrohres aufweist. Für den Fall, dass die Baufolie von außen über den Abstandhalter hochgezogen und auf dem inneren, dem Bauwerk zugewandten Rand oder Ende des Abstandhalters gelegt und dort fixiert wird, würde die Baufolie die Aufnahmeöffnung im Abstandhalter für das Kontrollrohr verdecken. Daher ist es günstig, hier eine entsprechende Ausnehmung vorzusehen, die idealerweise mit der Ausnehmung in dem Abstandhalter zusammenwirkt.

Alternativ ist auch vorgesehen, dass die Baufolie auf der innenliegenden, zweiten Seite, am Abstandhalter hochgezogen ist und den Abstandhalter gleichwohl überlappt. Auch in diesem Fall ist die Einbringung einer Ausnehmung zur Aufnahme des Kontrollrohres günstig. In diesem Fall schützt die Baufolie nicht nur das Drainagematerial, sondern auch den Abstandhalter, der als verlorenes Schalungselement in den Rand der Bodenplatte miteingegossen wird.

Die erfindungsgemäße Aufgabe wird auch durch ein Bauwerk mit einem erfindungsgemäßen Leckagekontrollsystem gelöst.

Ein wesentlicher Kostenvorteil besteht insbesondere darin, dass das erfindungsgemäß vorgeschlagene Leckagekontrollsystem in sich so einfach realisiert ist, dass es als Bausatz an eine Baustelle geliefert werden kann, und keine die Dichtigkeit unmittelbar betreffenden Arbeiten, wie das Verschweißen von Folien oder Anschlüssen mit diesem Vorschlag ausgeführt werden müssen. Ein weiterer Vorteil besteht darin, dass die Gebäudeabdichtung, die im Wesentlichen aus der Leckagefolie, ihrer Schutzlage (Folienschutzvlies oder Sand), gegebenenfalls dem auf der Leckagefolie liegenden Drainagematerial und der Baufolie, nach dem Betonieren der Bodenplatte keinen weiteren Schutz vor Beschädigung während der Zeit des Betonierens der Wände benötigt. Auch benötigt der erfindungsgemäße Vorschlag bis zu 40 % weniger Material. Daher erreicht der Vorschlag auch eine erhebliche Kostensenkung bei so ausgestatteten Bauwerken.

Die an dem Bauwerk vorgesehene Leckagefolie bildet eine zweite, insbesondere wannen- oder topfartige Dichtebene. Der seitliche, hochgeschlagene Rand der Leckagefolie bildet dabei auch gleichzeitig die seitliche Begrenzung dieser Dichtebene. Die erfindungsgemäß vorgeschlagenen Abstandhalter bilden geschickter Weise ein Auflager, bzw. hochgelegte Befestigungspunkte für den Rand der Leckagefolie, wobei günstiger Weise (zumindest ein Teil) der Abstandhalter auch gleichzeitig das Kontrollrohr tragen, mit dem die Dichtigkeit der Bauwerksabdichtung kontrolliert werden kann. Daher erstreckt sich der erfindungsgemäße Vorschlag nicht nur auf die Realisierung eines Leckagekontrollsystems, sondern umfasst auch eine neuartige, kostengünstige Bauweise der zweiten Dichtebene mit der Leckagefolie. Dies wird insbesondere bei dem ebenfalls erfindungsgemäßen Verfahren deutlich. Auch das erfindungsgemäße Verfahren löst die Aufgabe und trägt erheblich zu einer Kostenreduktion bei der Erstellung eines entsprechenden Bauwerkes bei.

Die Erfindung schlägt des Weiteren ein weiteres Verfahren für die Errichtung eines Bauwerkes mit einer Dichtigkeitsüberwachung durch ein Leckagekontrollsystem wie in Anspruch 11 definiert.

Bei diesem Vorschlag wird der Abstandhalter zusammen mit dem Kontrollrohr einstückig verbaut. Es kann, aber nicht zwingend muss, in der auf der die Oberseite des Abstandhalters aufliegenden Leckage- oder Baufolie eine Ausnehmung zur Aufnahme des Kontrollrohres vorgesehen sein. Die Anordnung kann aber auch so gewählt werden, dass die Leckagefolie einerseits und/oder die Baufolie andererseits so auf der Oberseite des Abstandhalter spositioniert werden, dass eine Ausnehmung in diesen Folien nicht notwendig ist.

Des Weiteren ist vorgesehen, dass der mindestens eine Abstandshalter oder eine umlaufende Abstandshalterreihe Befestigungsfuß bzw. das mindestens eine Kontrollrohr im Bereich des Bodenplattenüberstandes positioniert wird. Eine solche Anordnung fördert die einfache Ausbildung einer wannen- oder topfartigen Ausgestaltung der Leckagefolie zur Bildung einer zweiten, zuverlässigen Dichtebene am Bauwerk.

In einer vorteilhaften Ausgestaltung ist vorgesehen, dass vor dem Erstellen der Bodenplatte das Drainagematerial mit einer Baufolie abgedeckt wird. Dadurch wird das Drainagematerial vor einfließenden Beton oder Betonschlämme beim Betonieren der Bodenplatte geschützt.

Geschickter Weise ist vorgesehen, dass nachdem das Drainagematerial mit der Baufolie abgedeckt ist, die Baufolie mit der Leckagefolie, vorzugsweise am Abstandshalter, befestigt bzw. miteinander verbunden wird. Die gleichzeitige Befestigung spart Bauzeit.

In einer weiteren bevorzugten Ausführungsform ist vorgesehen, dass vor dem Verbinden des Kontrollrohres mit dem Abstandshalter je eine Aufnahmeöffnung in die Leckagefolie und/oder Baufolie eingebracht wird.

Des Weiteren ist günstiger Weise vorgesehen, dass vor dem Hochschlagen der Leckagefolie bzw. dem Abdecken des Drainagematerial mit der Baufolie je eine Aufnahmeöffnung in die Leckagefolie und/oder Baufolie eingebracht wird.

Die Erfindung ist über den Zeitpunkt, wann gegebenenfalls eine Aufnahmeöffnung in die Leckagefolie und/oder Baufolie eingebracht werden muss, flexibel. Günstige Weise ist natürlich eine entsprechende Aufnahmeöffnung vor der Montage des Kontrollrohrs auf dem oder in dem Abstandhalter in den der Leckage- und/oder Baufolie vorzusehen.

Vorteilhafter Weise ist vorgesehen, dass vor dem Verlegen der Leckagefolie ein Folienschutzvlies ausgelegt wird. Üblicherweise ist dies der erste Schritt nach der Vorbereitung des Untergrundes, wodurch die Leckagefolie zusätzlich vor Beschädigungen geschützt wird. Es ist klar, dass ein solcher Schutz des Leckagefolie auch durch andere Weise erreicht werden kann. So ist zum Beispiel Sand als Schutzlage einsetzbar, was zu einem Folienschutzvlies äquivalent ist Sollte der Untergrund entsprechend plan und problemlos sein, kann auf eine entsprechende Auslegung eines Folienschutzvlieses auch verzichtet werden.

Des Weiteren ist in dem Vorschlag vorteilhafter Weise vorgesehen, dass dass im Bereich der Aufnahmeöffnung die Leckagefolie dicht mit dem Kontrollrohr verbunden wird. Auch bei dieser Weiterentwicklung der Erfindung wird die eingangs gestellte Aufgabe gelöst. Ein mehrmaliges Erscheinen des Handwerkers, der die Leckagefolie ausbringt, ist nicht notwendig. Durch das dichte Verschweißen oder sonstige Verbinden der Leckagefolie mit dem Kontrollrohr ist es möglich, im Bereich des Kontrollrohres einen dichten Raum zu schaffen.

Bei einer bevorzugten Ausgestaltung des Vorschlags ist vorgesehen, dass nachdem die Leckagefolie an dem Abstandshalter hochgeschlagen ist, die Leckagefolie an dem Abstandshalter befestigt wird.

Die Leckagefolie wird am Abstandshalter hochgeschlagen oder hochgezogen (was hier gleichwertig ist) und vorzugsweise im oberen Segment oder auf der Oberseite der Abstandhalter an diesen fixiert und bildet so den oberen Rand des Wandbereiches der Gebäudeabdichtung.

Insgesamt ist die vorgeschlagene Erfindung sehr vielseitig, da die durch die Erfindung vorgeschlagene Verbesserung der Gebäudeabdichtung für sich allein oder aber auch, ausgerichtet auf das ebenfalls erfindungsgemäße Leckagekontrollsystem genutzt werden kann. Die Erfindung, in allen ihren hier vorgestellten Facetten, vereint Einfachheit der Konstruktion, reduzierte Kosten durch Material- und Arbeitszeiteinsparung und sichere Verwendbarkeit der Vorschläge durch einen hohen Schutz der Baumaterialien während der Bauphase.

Die Erfindung (nicht beansprucht) bezieht sich des Weiteren auch auf eine vorteilhafte Verwendung der Leckagefolie mit einer Reihe von Abstandshaltern zur Bildung einer insbesondere wannenartige Gebäudeabdichtung, wobei die Gebäudeabdichtung einen Bodenbereich und einen hieran dicht anschließenden, gegenüber dem Bodenbereich hochstehenden Wandbereich aufweist und die Gebäudeabdichtung für ein Bauwerk vorgesehen ist, das eine auf einem Untergrund liegende Bodenplatte und im Wesentlichen vertikal orientierte Wände aufweist, wobei der Bausatz
- eine Mehrzahl von Abstandshaltern aufweist und die Abstandhalter dafür vorgesehen sind unter der Bodenplatte und/oder auf dem Untergrund angeordnet zu sein,
- sowie eine Leckagefolie aufweist und die Leckagefolie dafür vorgesehen ist,
unter der Bodenplatte des Bauwerks, den Bodenbereich der Gebäudeabdichtung bildend, verlegt zu sein und die Leckagefolie des Weiteren dafür vorgesehen ist, an den Abstandhaltern hochgezogen und an diesen befestigt zu sein, um den Wandbereich der Gebäudeabdichtung zu bilden.

In diesem Zusammenhang wird insbesondere darauf hingewiesen, dass alle in Bezug auf die Vorrichtung, also den Leckagekontrollsystem oder Bauwerk beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur in Bezug auf das Verfahren für die Errichtung eines Bauwerkes, insbesondere mit einer Dichtigkeitsüberwachung durch ein Leckagekontrollsystem, genannte, bauliche also vorrichtungsgemäße Merkmale können auch im Rahmen der Vorrichtungsansprüche, bezogen auf den beanspruchte Leckagekontrollsystem oder Bauwerk berücksichtigt und beansprucht werden und zählen ebenfalls zur Offenbarung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1 und Fig. 2: je in einer vertikalen Schnittdarstellung das erfindungsgemäße Leckagekontrollsystem, bzw. das ebenfalls erfindungsgemäße Bauwerk mit diesem Leckagekontrollsystem;
- Fig. 3a bis 3d: je in einer vertikalen Schnittdarstellung verschiedene Schritte des erfindungsgemäßen Verfahrens;

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar.

Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

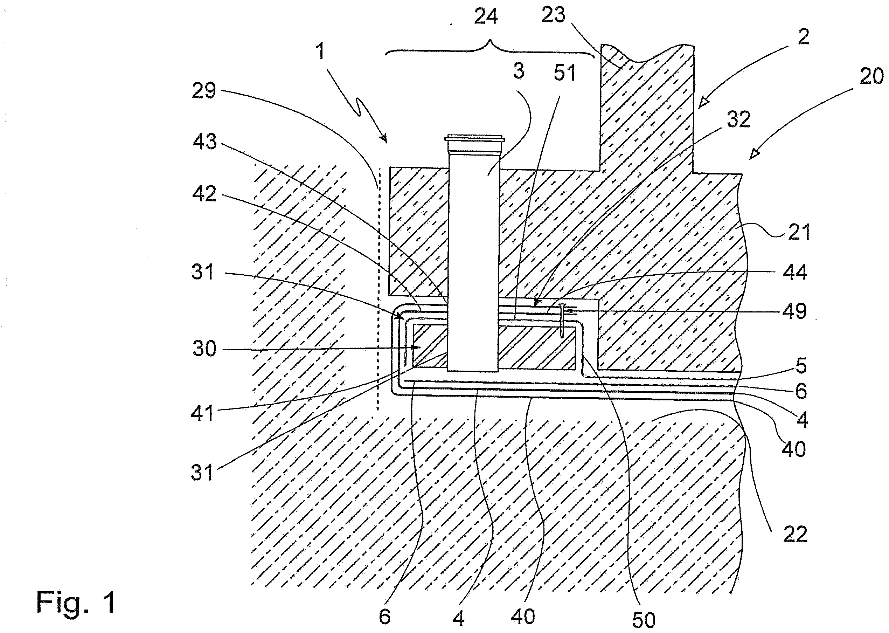

Figur 1 zeigt ein erstes Ausführungsbeispiel des erfindungsgemäßen Leckagekontrollsystems 1 bzw. des ebenfalls erfindungsgemäßen Bauwerks 2 mit diesem Leckagekontrollsystem 1.

Das Bauwerk 2 ruht dabei auf einem ausreichend tragfähigen Untergrund 22. Das Bauwerk 2 besteht dabei aus einer im Wesentlichen horizontal verlegten Bodenplatte 21, auf der im Wesentlichen vertikal orientierte Wände 23 angeordnet sind. Üblicherweise wird die Bodenplatte 21 aus Beton gegossen. Beispielsweise ist das Bauwerk 2 als Behälter ausgebildet, in dem sich Flüssigkeiten sammeln können, oder in dem auch Flüssigkeiten gelagert werden. Daher besitzt die Oberseite der Bodenplatte 21, gegebenenfalls auch die Innenseiten der Wände 23, eine entsprechende Bauwerksabdichtung 20. Die Bodenplatte 21 ist dabei etwas größer dimensioniert wie die Abmessungen des Bauwerkes 2, das bedeutet, dass sich außerhalb der Wände 23 nach außen, in Figur 1 links von der Wand 23, ein Bodenplattenüberstand 24 ergibt.

Das vorgeschlagene Leckagekontrollsystem 1 hat dabei die Aufgabe, die Prüfung der Dichtigkeit der Bauwerksabdichtung 20 zu erleichtern bzw. zu unterstützen.

Hierfür besitzt das Leckagekontrollsystem 1 eine Leckagefolie 4, die unter dem Bauwerk 2 flächig dicht angeordnet ist. Sie soll vermeiden, dass aus dem Bauwerk 2, zum Beispiel den Behälter, austretende Flüssigkeit in den Untergrund 22 gelangt.

Unterhalb der Leckagefolie 4 ist ein Folienschutzvlies 40 verlegt, das die Leckagefolie 4 vor spitzen Gegenständen wie Steine usw. des Untergrundes 22 schützt. Auf der Leckagefolie 4 ist das Drainagematerial 6 angeordnet. Als Drainagematerial 6 ist zum Beispiel eine Drainagematte, ein Drainagevlies oder auch eine Kiesfilterschicht vorgesehen.

Das Drainagematerial 6 ist von einer Baufolie 5 abgedeckt. Die Baufolie 5 vermeidet, dass die Betonschlämme der zu gießenden Bodenplatte 21 in das Drainagematerial 6 einfließt und somit die Drainagefuntion des Drainagematerials 6 zunichtemacht.

Die Baufolie 5 ist nicht abdichtend auf dem Drainagematerial 6 angeordnet. D.h. im Fall einer Undichtigkeit der Bauwerksabdichtung 20 gelangt die aus dem Behälter bzw. Bauwerk 2 austretende Flüssigkeit durch die Schicht der Baufolie 5 in das Drainagematerial 6 und wird von dieser dann zur Seite, horizontal nach außen geleitet. Die Leckagefolie 4 verhindert ein Einsickern der austretenden Flüssigkeit in den Untergrund 22.

Das Drainagematerial 6 hat die Aufgabe einen Kanal oder Korridor zu bilden, in dem aus dem Bauwerk 2 austretende Flüssigkeit gesammelt und zur Seite hin abgeleitet werden kann. Das eingesetzte Vlies hat einerseits eine kapillare Wirkung und transportiert so die eingetretene Flüssigkeit, sie bildet aber auch einen Abstandshalter zwischen der Bodenplatte 21 und dem Untergrund 22.

In dem hier gezeigten Ausführungsbeispiel ist im Bereich des Bodenplattenüberstandes 24 der Bodenplatte 21, unter der Bodenplatte 21, ein Abstandhalter 30 positioniert. Die Leckagefolie 4, wie auch das Folienschutzvlies 40, befinden sich unterhalb des Bodenplattenüberstandes 24, das ja Teil der Bodenplatte 21 ist. Vorzugsweise, aber nicht zwingend, erstreckt sich auch das Drainagematerial 6 bis in den Bereich des Bodenplattenüberstandes 24. Der Abstandhalter 30 hat mehrere Aufgaben:
Zunächst bildet der Abstandhalter 30 für das Kontrollrohr 3 einen Aufstellfuß. Das Kontrollrohr 3 erstreckt sich dabei bevorzugt im Wesentlichen vertikal nach oben und steht stabil am oder in dem Abstandhalter 30. Vorzugsweise ist in dem Abstandhalter 30 eine Ausnehmung 31 vorgesehen, in die das Kontrollrohr 3 passgenau, zum Beispiel leicht klemmend, eingeschoben ist. Dabei ist das Kontrollrohr 3 in die Bodenplatte 21, genau genommen in dem Bodenplattenüberstand 24, eingegossen. Der Abstandhalter 30 wirkt insofern als verlorenes Schalungselement.

Des Weiteren ist die Leckagefolie 4 an dem Abstandhalter 30 nach oben hochgeschlagen. Wie beschrieben ist die Leckagefolie 4 flächig dicht ausgebildet. Die Leckagefolie 4 ist dabei um den gesamten Rand des Bauwerkes 2, unterhalb der Bodenplatte 21 oder in die Bodenplatte 21 integriert, wannenartig nach oben hochgezogen, um so eine Auffangwanne für aus dem Bauwerk 2 austretende Flüssigkeit zu bilden. Der Abstandhalter 30 bildet dabei einen über der Lage der Leckagefolie 4 (bezogen auf die Position der Leckagefolie 4 unter der Bodenplatte 21) liegenden Anlage- bzw. Befestigungspunkt für die hochgeschlagene Leckagefolie 4.

Die Anordnung ist dabei so gewählt, dass die Leckagefolie 4 von innen, unterhalb des Bauwerkes 2 kommend, am Bauwerksrand, unterhalb des Bodenplattenüberstandes 24 und außerhalb des Kontrollrohres 3 nach oben hochgeschlagen ist. Die Leckagefolie 4 ist somit auf der ersten Seite 31 des Kontrollrohrs 3 bzw. des Abstandhalters 30 an diesem hochgeschlagen. Die erste Seite 31 befindet sich auf der dem Bauwerk 2 zugewandten Seite des Kontrollrohres 3. Dieser vertikal nach oben weisende Bereich der Leckagefolie 4 ist mit 41 gekennzeichnet und ist auf der ersten Seite 31 angeordnet. Der Abstandhalter 30 liegt auf der Leckagefolie 4, wird seitlich, außen von dem vertikalen Bereich 41 eingeschlossen und wird von dem wiederum horizontal verlaufenden Randbereich 42 der Leckagefolie 4 fast vollkommen umschlungen. Der Randbereich 42 liegt auf der Oberseite des Abstandhalters 30. Die Leckagefolie 4 besitzt im Randbereich 42 eine Ausnehmung 43, durch die das Kontrollrohr 3 durchgreift.

Alternativ ist die Leckagefolie 4 hier dicht an das Kontrollrohr 3 angeschlossen, zum Beispiel verschweißt, verklebt oder sonst in geeigneter Weise abgedichtet angefügt. Das Ende 44 der Leckagefolie 4, das sich an den Randbereich 42 anschließt, ist mit einem Befestigungsmittel 49 (zum Beispiel eine Klebeschicht oder einem mechanischen Befestigungsmittel wie ein Stift, Nagel oder Ähnliches) auf der Oberseite des Abstandhalter 30 festgelegt und fixiert.

Die Anordnung des Befestigungsmittels 49 ist dabei an der zweiten Seite 32 des Kontrollrohres 3 bzw. des Abstandhalters 30, der ersten Seite 31 gegenüberliegend gewählt. Die zweite Seite 32 befindet sich auf der dem Bauwerk 2 zugewandten Seite des Kontrollrohr 3 bzw. Abstandhalter 30.

Vorzugsweise wird eine Reihe von Abstandshaltern 30 um das Bauwerk 2 herum, insbesondere im Bereich des Bodenplattenüberstandes 24 angeordnet, die so einen, idealerweise jeweils gleich hohen Befestigungspunkt für die Leckagefolie 4 bilden. Dabei muss nicht zwingender Weise jeder Abstandhalter 30 ein Kontrollrohr 3 aufnehmen.

Selbstverständlich ist es möglich, dass der Endbereich 44 der Leckagefolie 4 auch durch andere Maßnahmen als den vorgeschlagenen Abstandhalter 30 am Rand, in der entsprechenden Höhe oberhalb der Dichtebene der unter der Bodenplatte 21 verlegten Leckagefolie 4 festgelegt ist.

Durch eine solche wannenartige Ausgestaltung der Leckagefolie 4 wird erreicht, dass aus einer Undichtigkeit der Bauwerksabdichtung 20 austretende Flüssigkeit in dieser Leckagefolienwanne gesammelt wird und nicht sofort in den Untergrund versickert. Über das Kontrollrohr 3 kann die ausgetretene Flüssigkeit optisch (zum Beispiel bei regelmäßigen Inspektionen) oder durch Sensoren automatisiert entdeckt werden.

Idealerweise besitzt das Folienschutzvlies 40 die gleichen Abmessungen wie die Leckagefolie 4, und umschlingt in gleicher Weise wie die Leckagefolie 4 den Abstandhalter 30 und wird in gleicher Weise mit dem Befestigungsmittel 49 befestigt.

In dem hier gezeigten Ausführungsbeispiel erstreckt sich das Drainagematerial 6 bis unter das Kontrollrohr 3 bzw. den Abstandhalter 30. Falls sich der Abstandhalter 30 über hier nicht gezeigte Beabstandungsfüße auf der Leckagefolie 4 abstützt, ist auch dadurch gewährleistet, dass aus dem Bauwerk 2 austretende Flüssigkeit unter das Kontrollrohr 3 gelangt und dort zum Beispiel optisch oder durch eine in das Kontrollrohr 3 eingeführte, einführbare oder eingebaute Sonde entdeckt wird.

Die Baufolie 5 ist in dem in Figur 1 gezeigten Ausführungsbeispiel nicht unter das Kontrollrohr 3 gezogen, sondern wird auf der dem Bauwerk 2 zugewandten Seite 32, an der Innenseite des Abstandhalters 30 nach oben geführt. Dieser vertikal nach oben gerichtete Bereich ist mit dem 50 gekennzeichnet. Das Ende 51 der Baufolie 5 ist ebenfalls mit dem Befestigungsmittel 49, vorzugsweise im gleichen Arbeitsschritt wie die Leckagefolie 4 und das Folienschutzvlies 40 an dem Abstandhalter 30 festgelegt.

Der seitliche Rand der Bodenplatte 21 wird durch eine Noppenbahn 29 gegenüber dem übrigen Erdreich abgegrenzt.

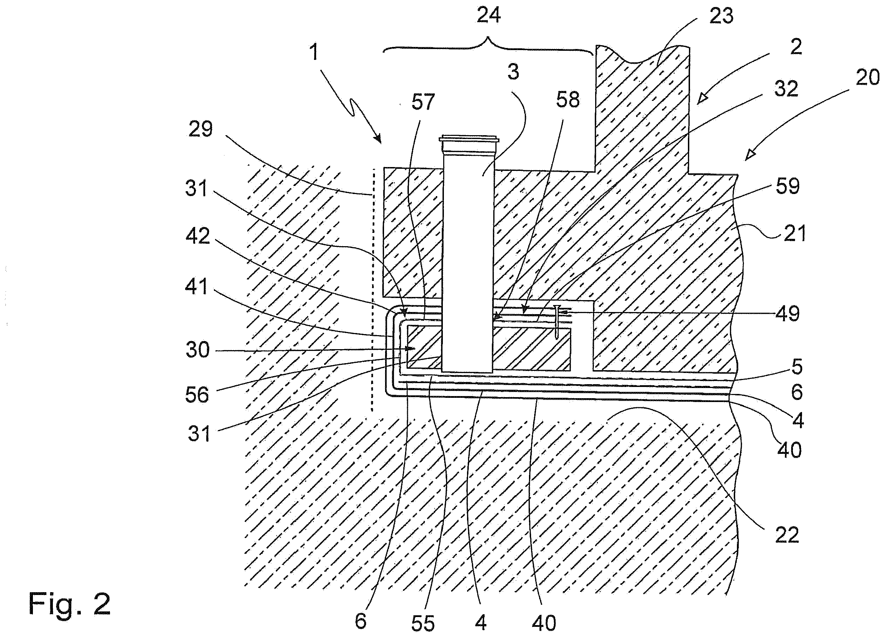

Das in Figur 2 gezeigte erfindungsgemäße Ausführungsbeispiel ist fast identisch mit dem in Figur 1 gezeigten. Zur Vermeidung von Wiederholungen werden nur die Unterschiede erläutert.

Im Vergleich mit Figur 1 ist die Verlegung der Baufolie 5 in Figur 2 geändert. In der Variante nach Figur 1 ist die Baufolie 5 auf der dem Bauwerk 2 zugewandten Seite 32 vertikal nach oben geführt (Bezugszeichen 50) und nähert sich von der Innenseite her dem Kontrollrohr 3, wohingegen sich die Leckagefolie 4 von der dem Bauwerk abgewandten, ersten Seite 31 dem Kontrollrohr 3 nähert und dabei den Abstandhalter 30 fast vollständig umschlingt. In dem in Figur 1 gezeigten Beispiel ist der Abstandhalter 30 vollständig von Folie eingedeckt, so dass sich die Baufolie 5 und die Leckagefolie 4 auf der Oberseite des Abstandhalters 30 überlappen.

Hingegen ist in Figur 2 die Baufolie 5 parallel zur Leckagefolie 4 geführt. Der unter dem Kontrollrohr 3, im Wesentlichen horizontal verlegte Bereich der Baufolie 5 ist mit dem Bezugszeichen 55 gekennzeichnet. An der Außenseite 31 ist die Baufolie 5 vertikal nach oben gezogen und bildet den Vertikalabschnitt 56. Der horizontale Abschnitt 57 der Baufolie 5 liegt, genauso wie der horizontale Abschnitt 42 der Leckagefolie 4, auf der Oberseite des Abstandhalter 30. Da sich die Baufolie 5 beidseits des Kontrollrohrs 3 befindet ist in der Baufolie 5 im Bereich des horizontalen Abschnitts 57 eine Ausnehmung 58 eingebracht, in die das Kontrollrohr 3 eingeschoben werden kann. Der horizontale Abschnitt 57 läuft dann im Endbereich 59 aus, an dem die Baufolie 5 mithilfe des Befestigungsmittel 49, ebenfalls wie die Leckagefolie 4 und auch das Folienschutzvlies 40, auf der Oberseite des Abstandhalters 30 festgelegt ist.

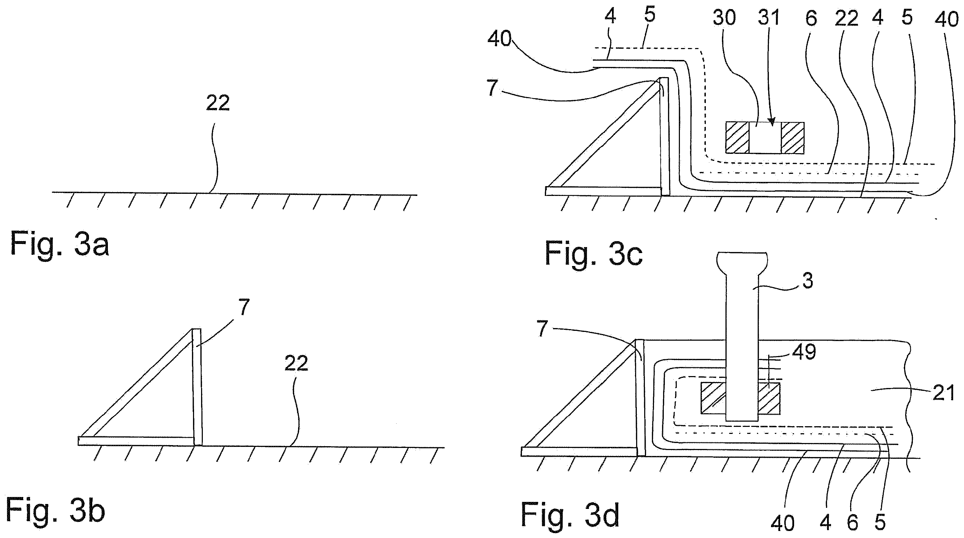

In den Figuren 3a, 3b, 3c, und 3d sind verschiedene Schritte des ebenfalls erfindungsgemäßen Verfahrens gezeigt.

Im ersten Schritt (Figur 3a) wird ein ausreichend tragfähiger Untergrund 22 vorbereitet. Dies erfolgt auf im Bauwesen, bzw. bei der Gründung eines Gebäudes oder Bauwerkes üblicher Art und Weise.

Im nächsten Schritt (Figur 3b) wird die Schalung 7 für die zu gießenden Bodenplatte auf den vorbereiteten Untergrund 22 gestellt.

Im nächsten, darauffolgenden Schritt (Figur 3c) wird zunächst auf die von der Schalung 7 begrenzten Schalungsfläche das Folienschutzvlies 40 als unterste Lage verlegt. Auf das Folienschutzvlies 40 wird dann (oder auch gleichzeitig mit dem Folienschutzvlies 40) die Leckagefolie 4 verlegt. Die Leckagefolie 4 wird dabei auf der gesamten zu betonierenden Fläche, vorzugsweise wie auch das Folienschutzvlies 40, ausgelegt.

Auf die Leckagefolie 4 wird dann das Drainagematerial 6, zum Beispiel ein Drainagevlies oder auch eine Drainagematte gelegt. Für den Schutz des Drainagematerials 6 wird auf dieses dann eine Baufolie 5 gelegt. Idealerweise wird dabei auch die Baufolie 5 auf die gesamte Fläche des Drainagematerials 6 ausgelegt.

In dem in Figur 3c gezeigten Ausführungsbeispiel stehen die seitlichen Enden des Folienschutzvlieses 40, die Leckagefolie 4 und auch die Baufolie 5 über den Rand der Schalung 7, bzw des Schalungselementes nach außen vor und bilden einen Überstand.

Auf den so vorbereiteten Aufbau wird/werden dann der bzw. die Abstandhalter 30 gestellt und positioniert, wobei idealerweise die Abstandhalter 30 relativ nah am Rand des zu betonierenden Bereiches, also in der Nähe der Schalung 7, angeordnet werden, ohne aber die Erfindung hierauf zu beschränken. Idealerweise stützt/stützen sich der/die Abstandhalter 30 beim Betonieren an dem Schalungselement 7 ab und bleibt/en so leichter an der/den gewünschten Position/en. Idealerweise wir eine Reihe von Abstandshaltern 30 auf der Schalungsfläche aufgestellt, die das zu erstellende Bauwerk (hier durch seine Wände begrenzt) umgeben.

In Figur 3d ist zunächst gezeigt, dass nun der bereits hochgeschlagene Überstand der Leckagefolie 4 und der anderen Materialien (Drainagematerial 6 und gegebenenfalls des Folienschutzvlieses 40) über den Abstandhalter 30 zurückgeschlagen und so der Abstandhalter 30 C-artig, also von drei Seiten, eingehüllt ist. Es resultiert so die Anordnung, dass zumindest die Leckagefolie 4 an dem Abstandhalter 30 hochgeschlagen ist.

Der Überstand der Leckagefolie 4 und der gegebenenfalls anderen Materialien wird dann mit einem Befestigungsmittel 49 an dem Abstandhalter 30 befestigt.

Falls in der Leckagefolie 4 bzw. den anderen über den Abstandhalter 30 geführten Folienstücken noch keine Ausnehmung eingearbeitet ist, wird nun eine entsprechende Ausnehmung vorgesehen, in die das Kontrollrohr 3 eingeführt werden kann. In Figur 3c ist die Ausnehmung 31 in dem Abstandhalter 30 angedeutet, in die das Kontrollrohr 3 eingesteckt wird.

Danach wird die durch die Schalung 7 begrenzte Schalungsfläche ausbetoniert und es entsteht die Bodenplatte 21.

Es sei an dieser Stelle bemerkt, dass die zeichnerische Darstellung in Figur 3c und 3d aus Übersichtlichkeitsgründen nicht ganz realistisch ist, da natürlich die einzelnen Schichten von Folienschutzvlieses 40, Leckagefolie 4, Drainagematerial 6 und Baufolie 5 in Wahrheit sehr viel dichter zusammenliegen.

Die Erfindung ist nicht auf eine der vorbeschriebenen Ausführungsformen beschränkt, sondern in vielfältiger Weise abwandelbar.

### Bezugszeichenliste

- 1: Leckagekontrollsystem
- 2: Bauwerk
- 3: Kontrollrohr
- 4: Leckagefolie
- 5: Baufolie
- 6: Drainagemateril
- 7: Schalung
- 20: Bauwerksabdichtung
- 21: Bodenplatte
- 22: Untergrund
- 23: Wand
- 24: Bodenplattenüberstand
- 29: Noppenbahn
- 30: Abstandhalter
- 31: erste Seite
- 32: zweite Seite
- 40: Folienschutzvlies
- 41: Bereich
- 42: Randbereich
- 43: Ausnehmung
- 44: Endbereich
- 49: Befestigungsmittel
- 50: Bereich
- 51: Ende
- 55: Bereich
- 56: Vertikalabschnitt
- 57: horizontaler Abschnitt
- 58: Ausnehmung
- 59: Endbereich

## Patentansprüche

1. Leckagekontrollsystem (1) für die Dichtigkeitsüberwachung eines Bauwerkes (2), wobei das Leckagekontrollsystem (1) dafür vorgesehen ist, mit einer wannenartigen Gebäudeabdichtung des Bauwerks (2) zusammenzuwirken, wobei die Gebäudeabdichtung einem Bodenbereich und einen hieran dicht anschließenden, gegenüber dem Bodenbereich hochstehenden Wandbereich aufweist und das Bauwerk (2) eine auf einem Untergrund liegende Bodenplatte (21) und im Wesentlichen vertikal orientierte Wände (23) aufweist wobei das Leckagekontrollsystem umfasst:
- eine Mehrzahl von Abstandhaltern (30), die unter der Bodenplatte (21) oder in der Bodenplatte (21) positionierbar ist,
- ein Kontrollrohr (3), das am Bauwerk (2), im Bauwerk (2) oder neben einer Wand (23) in einem Abstandshalter (30) positioniert ist,
- eine Leckagefolie (4), die unter der Bodenplatte (21) positionierbar ist sowie unter dem Kontrollrohr (3) angeordnet ist, welche derart an den Abstandshaltern (30) hochgeschlagen ist, um zumindest einen Teil des Wandbereiches der Gebäudeabdichtung zu bilden, und die unter dem Bauwerk (2) anordnebar ist, so dass die Leckagefolie (4) zumindest einen Teil des Bodenbereiches der Gebäudeabdichtung bilden kann, und
- im Bereich des Kontrollrohres (3) ein Drainagematerial (6) zwischen Leckagefolie (4) und Kontrollrohr (3) angeordnet ist.

2. Leckagekontrollsystem (1) nach Anspruch 1, **dadurch gekennzeichnet, dass** die Mehrzahl von Abstandshaltern (30) eine Abstandshalterreihe bildet, die dafür vorgesehen sind, das Bauwerk (2) zu umgeben.

3. Leckagekontrollsystem (1) nach einem der vorhergehenden Ansprüche, **dadurch**
**gekennzeichnet, dass** ein jeweiliger Abstandshalter (30) einstückig mit dem Kontrollrohr (3) ausgebildet ist oder ein jeweiliger Abstandshalter (30) und das Kontrollrohr (3) als jeweils getrennte, aber zusammenwirkende Bauteile ausgebildet sind und/oder sich ein jeweiliger Abstandshalter (30) über mindestens einen Beabstandungsfuß auf der Leckagefolie (4) abstützt.

4. Leckagekontrollsystem (1) nach einem der vorhergehenden Ansprüche, **dadurch**
**gekennzeichnet, dass** die Leckagefolie (4) von unten über einen jeweiligen Abstandshalter (30) gelegt und oben an diesen oder in dessen oberen Segment an der Seite fixiert ist.

5. Leckagekontrollsystem (1) nach einem der vorhergehenden Ansprüche, **dadurch**
**gekennzeichnet, dass** die Leckagefolie (4) auf einer ersten Seite (31) des Kontrollrohres (3) bzw. eines jeweiligen Abstandshalters (30), zum Beispiel der dem Bauwerk (2) abgewandten Seite des Kontrollrohres (3) bzw. des Abstandshalters (30) hochgeschlagen ist oder die Leckagefolie (4) auf einer zweiten Seite (32) des Kontrollrohres (3) bzw. des Abstandshalters (30), der ersten Seite (31) gegenüberliegend, zum Beispiel der dem Bauwerk (2) zugewandten Seite des Kontrollrohres (3) bzw. Abstandshalters (30) an diesen festlegbar ist.

6. Leckagekontrollsystem (1) nach einem der vorhergehenden Ansprüche, **dadurch**
**gekennzeichnet, dass** die Leckagefolie (4) eine Ausnehmung zur Aufnahme des Kontrollrohres (3) aufweist und/oder auf der Leckagefolie (4) eine Baufolie (5) angeordnet ist und die Baufolie (5) dafür vorgesehen ist, unter dem Bauwerk (2) angeordnet zu sein.

7. Leckagekontrollsystem (1) nach einem der vorhergehenden Ansprüche, **dadurch**
**gekennzeichnet, dass** insbesondere als Drainagematerial (6) ein Drainagevlies, eine Drainagematte oder eine Kiesfilterschicht vorgesehen ist und/oder unter der Leckagefolie (4) ein Folienschutzvlies (40) angeordnet ist und insbesondere das Folienschutzvlies (40) mit der Leckagefolie (4) gemeinsam verlegt und befestigt ist.

8. Leckagekontrollsystem (1) nach Anspruch 6
**dadurch gekennzeichnet, dass** die Baufolie (5) an dem Kontrollrohr (3) bzw. dem Abstandshalter (30) hochgezogen ist und an diesem anschließt und/oder die Baufolie (5) eine Ausnehmung zur Aufnahme des Kontrollrohres (3) aufweist.

9. Leckagekontrollsystem (1) nach einem der Ansprüche 6 oder 8,
**dadurch gekennzeichnet, dass** die Baufolie (5) auf einer zweiten Seite (32) des Kontrollrohres (3), der ersten Seite (31) gegenüberliegend, zum Beispiel der, dem Bauwerk (2) zugewandten Seite an einem jeweiligen Abstandshalter (30) hochgezogen ist oder die Baufolie (5) auf einer ersten Seite (31) des Kontrollrohres (3) zum Beispiel der dem Bauwerk (2) abgewandten Seite des Kontrollrohres (3) bzw. einem jeweiligen Abstandshalter (30) hochgeschlagen ist.

10. Bauwerk (2) mit einem Leckagekontrollsystem (1) nach einem der vorhergehenden Ansprüche 1-9.

11. Verfahren für die Errichtung eines Bauwerkes (2) mit einer Dichtigkeitsüberwachung durch ein Leckagekontrollsystem (1), **gekennzeichnet durch** folgende Schritte:
a) Vorbereitung eines ausreichend tragfähigen Untergrundes
b) Verlegung einer Leckagefolie (4) auf dem Untergrund
c) Verlegung von Drainagematerial (6) auf der Leckagefolie (4)
d) Positionierung einer Mehrzahl Abstandshalter (30) auf dem Drainagematerial (6) und anordnen zumindest eines Kontrollrohrs (3) an einem der Abstandshalter (30) und Positionierung des zumindest einen Kontrollrohrs (3) mit seinem Abstandshalter (30) auf dem Drainagematerial
e) Hochschlagen des äußeren Bereiches der Leckagefolie (4) über dem Abstandshalter (30) zumindest im Bereich eines jeweiligen Abstandshalters (30)
f) Für den Fall, dass an einem jeweiligen positionierten Abstandshalter (30) ein Kontollrohr (3) anzuordnen ist, Positionieren des Kontrollrohres (3) durch eine Ausnehmung der hochgeschlagenen Leckagefolie (4) am oder im Abstandshalter (30),
g) Erstellen einer Bodenplatte (21) und des übrigen Bauwerks (2).

12. Verfahren nach Anspruch 11, **dadurch gekennzeichnet, dass** der die Mehrzahl Abstandshalter (30) im Bereich eines Bodenplattenüberstandes der Bodenplatte (21) positioniert wird.

## Claims

1. Leakage control system (1) for the tightness monitoring of a structure (2), wherein the leakage control system (1) is provided to interact with a trough-like building seal of the structure (2), wherein the building seal has a floor region and a wall region which tightly adjoins the latter and rises up in relation to the floor region, and the structure (2) has a floor slab (21) lying on an underlying surface, and substantially vertically oriented walls (23), wherein the leakage control system comprises:
- a plurality of spacers (30) which can be positioned under the floor slab (21) or in the floor slab (21),
- a control pipe (3) which is positioned in a spacer (30) on the structure (2), in the structure (2) or next to a wall (23),
- a leakage film (4) which can be positioned under the floor slab (21) and is arranged under the control pipe (3) and which is turned up at the spacers (30) in order to form at least part of the wall region of the building seal, and which can be arranged under the structure (2) such that the leakage film (4) can form at least part of the floor region of the building seal, and
- in the region of the control pipe (3), a drainage material (6) is arranged between the leakage film (4) and the control pipe (3).

2. Leakage control system (1) according to Claim 1, **characterized in that** the plurality of spacers (30) form a series of spacers which are provided to surround the structure (2).

3. Leakage control system (1) according to either of the preceding claims, **characterized in that** a respective spacer (30) is formed integrally with the control pipe (3), or a respective spacer (30) and the control pipe (3) are designed as in each case separate, but interacting components, and/or a respective spacer (30) is supported on the leakage film (4) via at least one spacing foot.

4. Leakage control system (1) according to one of the preceding claims, **characterized in that** the leakage film (4) is placed from below over a respective spacer (30) and is fixed at the top to the latter or at the side in the upper segment thereof.

5. Leakage control system (1) according to one of the preceding claims, **characterized in that** the leakage film (4) is turned up on a first side (31) of the control pipe (3) or of a respective spacer (30), for example that side of the control pipe (3) or of the spacer (30) which faces away from the structure (2), or the leakage film (4) can be secured to the control pipe (3) or spacer (30) on a second side (32) of the control pipe (3) or of the spacer (30), opposite the first side (31), for example that side of the control pipe (3) or spacer (30) which faces the structure (2).

6. Leakage control system (1) according to one of the preceding claims, **characterized in that** the leakage film (4) has a recess for receiving the control pipe (3) and/or a building film (5) is arranged on the leakage film (4), and the building film (5) is provided to be arranged under the structure (2).

7. Leakage control system (1) according to one of the preceding claims, **characterized in that** the drainage material (6) in particular provided is a drainage fleece, a drainage mat or a gravel filter layer, and/or a film protection fleece (40) is arranged under the leakage film (4) and in particular the film protection fleece (40) is laid jointly with the leakage film (4) and secured.

8. Leakage control system (1) according to Claim 6, **characterized in that** the building film (5) is pulled up on, and adjoins, the control pipe (3) or the spacer (30), and/or the building film (5) has a recess for receiving the control pipe (3).

9. Leakage control system (1) according to either of Claims 6 and 8, **characterized in that** the building film (5) is pulled up on a respective spacer (30) on a second side (32) of the control pipe (3), opposite the first side (31), for example the side facing the structure (2), or the building film (5) is turned up on a first side (31) of the control pipe (3), for example that side of the control pipe (3) or a respective spacer (30) which faces away from the structure (2).

10. Structure (2) having a leakage control system (1) according to one of the preceding Claims 1-9.

11. Method for erecting a structure (2) with tightness monitoring by a leakage control system (1), **characterized by** the following steps:
a) providing an underlying surface sufficiently capable of bearing a load
b) laying a leakage film (4) on the underlying surface
c) laying drainage material (6) on the leakage film (4)
d) positioning a plurality of spacers (30) on the drainage material (6) and arranging at least one control pipe (3) on one of the spacers (30) and positioning the at least one control pipe (3) with its spacer (30) on the drainage material
e) turning up the outer region of the leakage film (4) over the spacer (30) at least in the region of a respective spacer (30)
f) in the event that a control pipe (3) is to be arranged on a respective positioned spacer (30), positioning the control pipe (3) on or in the spacer (30) by means of a recess of the turned-up leakage film (4),
g) producing a floor slab (21) and the remaining structure (2).

12. Method according to Claim 11, **characterized in that** the plurality of spacers (30) are positioned in the region of a protrusion of the floor slab (21).

## Revendications

1. Système de contrôle de fuites (1) pour la surveillance de l'étanchéité d'un ouvrage (2), le système de contrôle de fuites (1) étant prévu pour coopérer avec une étanchéité de bâtiment en forme de cuve de l'ouvrage (2), l'étanchéité de bâtiment présentant une zone de fond et une zone de paroi s'y raccordant de manière étanche, dressée à la verticale par rapport à la zone de fond, et l'ouvrage (2) présentant une plaque de fond (21) reposant sur un support et des parois (23) orientées essentiellement verticalement, le système de contrôle de fuites comprenant :
- une pluralité d'entretoises (30) qui peuvent être positionnées sous la plaque de fond (21) ou dans la plaque de fond (21),
- un tube de contrôle (3) qui est positionné sur l'ouvrage (2), dans l'ouvrage (2) ou à côté d'une paroi (23) dans une entretoise (30),
- une feuille de fuites (4) qui peut être positionnée sous la plaque de fond (21) et qui est agencée sous le tube de contrôle (3), qui est relevée sur les entretoises (30) de manière à former au moins une partie de la zone de paroi de l'étanchéité de bâtiment, et qui peut être agencée sous l'ouvrage (2) de telle sorte que la feuille de fuites (4) peut former au moins une partie de la zone de fond de l'étanchéité de bâtiment, et
- un matériau de drainage (6) est agencé entre la feuille de fuites (4) et le tube de contrôle (3) dans la zone du tube de contrôle (3).

2. Système de contrôle de fuites (1) selon la revendication 1, **caractérisé en ce que** la pluralité d'entretoises (30) forme une rangée d'entretoises prévues pour entourer l'ouvrage (2).

3. Système de contrôle de fuites (1) selon l'une quelconque des revendications précédentes, **caractérisé en ce qu'**une entretoise respective (30) est réalisée d'une seule pièce avec le tube de contrôle (3) ou une entretoise respective (30) et le tube de contrôle (3) sont réalisés en tant que composants respectivement séparés mais coopérant et/ou une entretoise respective (30) s'appuie sur la feuille de fuites (4) par l'intermédiaire d'au moins un pied d'écartement.

4. Système de contrôle de fuites (1) selon l'une quelconque des revendications précédentes, **caractérisé en ce que** la feuille de fuites (4) est placée par le bas au-dessus d'une entretoise respective (30) et est fixée en haut sur celle-ci ou dans son segment supérieur sur le côté.

5. Système de contrôle de fuites (1) selon l'une quelconque des revendications précédentes, **caractérisé en ce que** la feuille de fuites (4) est relevée sur un premier côté (31) du tube de contrôle (3) ou d'une entretoise respective (30), par exemple le côté du tube de contrôle (3) ou de l'entretoise (30) détourné de l'ouvrage (2), ou la feuille de fuites (4) peut être immobilisée sur un deuxième côté (32) du tube de contrôle (3) ou de l'entretoise (30), à l'opposé du premier côté (31), par exemple le côté du tube de contrôle (3) ou de l'entretoise (30) tourné vers l'ouvrage (2).

6. Système de contrôle de fuites (1) selon l'une quelconque des revendications précédentes, **caractérisé en ce que** la feuille de fuites (4) présente un évidement pour recevoir le tube de contrôle (3) et/ou une feuille de construction (5) est agencée sur la feuille de fuites (4) et la feuille de construction (5) est prévue pour être agencée sous l'ouvrage (2).

7. Système de contrôle de fuites (1) selon l'une quelconque des revendications précédentes, **caractérisé en ce qu'**il est prévu notamment en tant que matériau de drainage (6) un non-tissé de drainage, un mat de drainage ou une couche de filtre à gravier et/ou un non-tissé de protection en feuille (40) est agencé sous la feuille de fuites (4) et notamment le non-tissé de protection en feuille (40) est posé et fixé conjointement avec la feuille de fuites (4).

8. Système de contrôle de fuites (1) selon la revendication 6, **caractérisé en ce que** la feuille de construction (5) est remontée sur le tube de contrôle (3) ou l'entretoise (30) et se raccorde à celui-ci ou celle-ci et/ou la feuille de construction (5) présente un évidement pour recevoir le tube de contrôle (3).

9. Système de contrôle de fuites (1) selon l'une quelconque des revendications 6 ou 8, **caractérisé en ce que** la feuille de construction (5) est remontée sur un deuxième côté (32) du tube de contrôle (3), à l'opposé du premier côté (31), par exemple le côté tourné vers l'ouvrage (2) sur une entretoise respective (30), ou la feuille de construction (5) est relevée sur un premier côté (31) du tube de contrôle (3), par exemple le côté du tube de contrôle (3) détourné de l'ouvrage (2) ou sur une entretoise respective (30).

10. Ouvrage (2) avec un système de contrôle de fuites (1) selon l'une quelconque des revendications 1 à 9 précédentes.

11. Procédé pour l'érection d'un ouvrage (2) avec une surveillance de l'étanchéité par un système de contrôle de fuites (1), **caractérisé par** les étapes suivantes :
a) la préparation d'un support suffisamment porteur,
b) la pose d'une feuille de fuites (4) sur le support,
c) la pose d'un matériau de drainage (6) sur la feuille de fuites (4),
d) le positionnement d'une pluralité d'entretoises (30) sur le matériau de drainage (6) et l'agencement d'au moins un tube de contrôle (3) sur l'une des entretoises (30) et le positionnement de l'au moins un tube de contrôle (3) avec son entretoise (30) sur le matériau de drainage,
e) le relevage de la zone extérieure de la feuille de fuites (4) au-dessus de l'entretoise (30) au moins dans la zone d'une entretoise respective (30),
f) dans le cas où un tube de contrôle (3) doit être agencé sur une entretoise positionnée respective (30), le positionnement du tube de contrôle (3) à travers un évidement de la feuille de fuites relevée (4) sur ou dans l'entretoise (30),
g) l'érection d'une plaque de fond (21) et du reste de l'ouvrage (2).

12. Procédé selon la revendication 11, **caractérisé en ce que** la pluralité d'entretoises (30) est positionnée dans la zone d'une saillie de plaque de fond de la plaque de fond (21).
